Europäisches Patentamt

**European Patent Office**

Office européen des brevets

(11) Publication number: **0 058 085**

**A2**

(12) # EUROPEAN PATENT APPLICATION

(21) Application number: **82300634.1**

(22) Date of filing: **09.02.82**

(51) Int. Cl.³: **F 01 K 7/00**
**F 01 K 19/02, F 01 K 25/08**
**C 02 F 1/16**

(30) Priority: **09.02.81 US 233038**

(43) Date of publication of application:
**18.08.82 Bulletin 82/33**

(84) Designated Contracting States:
**AT BE CH DE FR GB IT LI NL SE**

(71) Applicant: Bissell, Lawrence E.
1242 26th Street Apartment B.
Santa Monica, California 90404(US)

(72) Inventor: Bissell, Lawrence E.
1242 26th Street Apartment B.
Santa Monica, California 90404(US)

(74) Representative: Smith, Philip Antony et al,
REDDIE & GROSE 16 Theobalds Road
London WC1X 8PL(GB)

(54) Thermal energy conversion.

(57) A boiler 32 supplies saturated steam to a constant or reducing volume turbine 34 which drives a load 40, the energy being obtained by condensation of some of the moisture and reduction of the pressure instead of by expansion of the driving fluid as in the conventional expansion turbine. Condensed water in sump 44 is returned to the boiler by pump 46. Residual vapour is compressed by pump 39 and returned to the boiler.

Low-boiling point liquid may be used in place of water. If sea-water is fed to the boiler, distilled water may be drawn from the sump. In such a distillation plant the load may be a generator, the current from which helps to heat the boiler.

Fig. 2

EP 0 058 085 A2

-1-

## THERMAL ENERGY CONVERSION

This invention relates generally to heat engines and more particularly to condensing vapor engines.

All heat engines which are generally in use at present, such as internal combustion engines, steam engines and steam turbines, depend either entirely or for the most part on expansion of a heated vapor to effect the conversion of thermal energy to mechanical power. By this means most of the thermal energy remains in the vapor that has expanded to the point of uselessness to the conversion process, and thus the efficiency of these engines is limited.

The internal combustion engine has relatively poor efficiency and in addition has the disadvantage of contributing a high degree of atmospheric pollution in proportion to the amount of energy converted.

Steam engines and steam turbines, while being considerably more efficient than the internal combustion engine, still convert less than half of the thermal energy in the steam to mechanical power. Furthermore, for practical considerations these require condensing equipment of such bulk as to render them inappropriate for automotive use. Other drawbacks apply to conventional condensing systems which are used with large steam engines and steam turbines, such as thermal and chemical pollution of adjacent waters. Evaporative cooling condensing systems use large amounts of water, not only that which is evaporated but also that which must be discarded because of accumulated dissolved solids content caused by evaporation.

Present systems of distillation, such as are employed in the distillation of water and petroleum, also reject the heat of vaporization in the condensation process and thus suffer disadvantages similar to steam turbine systems.

In brief, arrangements in accordance with the present invention convert the heat of condensation of a liquefiable vapor to mechanical energy. Preferably saturated vapor from a suitable source is applied to a prime mover so constructed as to substantially preclude expansion of the vapor between inlet and exhaust as it passes through the prime mover. Instead, a pressure differential across the prime mover, between inlet and exhaust, is developed by condensation of at least a portion of the vapor due to the conversion of the heat of condensation to mechanical energy as the vapor progresses through the prime mover. The exhaust vapor is disposed of in suitable fashion, as is the liquid condensate resulting from the conversion process. The prime mover may be coupled to an associated load, such as a pump, a generator or the like, to develop useful output work.

The source of the saturated vapor may be a boiler, or the system including the prime mover may be coupled to the output of a conventional steam driven power plant in place of the conventional condenser. The vapor may be steam or, if desired, it may be the vapor of a liquid of low boiling point, such as dichlorodifluoromethane (Freon) or some other suitable vapor. Where a lower boiling point liquid is utilized, the system of the invention is particularly adaptable to converting the heat contained in hot water into useful energy, as for example the water heated by solar energy, through the mechanism of a heat exchanger.

In one particular embodiment, a source of saturated vapor is coupled to the inlet of a limited expansion prime mover which in turn is coupled to drive a load. The term "limited expansion" is used herein to designate a prime mover, such as a turbine, which does not provide significant expansion of the volume of the working fluid (the vapor) between inlet and exhaust. This term encompasses a constant volume prime mover, such as a constant volume turbine, as well as a turbine in which the volume of the working fluid is reduced appropriately between inlet and exhaust. Since the volume is proportional to cross-sectional area, in prime movers employed in systems of the present invention, the cross-sectional area of the inlet will be essentially equal to or greater than the cross-sectional area of the exhaust. It is permissible to have the working fluid volume expand within a portion of the prime mover, so long as the requirements set forth above with respect to the inlet and exhaust areas apply.

For the operation of a system in accordance with the invention, it is necessary to develop a negative gradient of both temperature and pressure from inlet to exhaust through the prime mover. This can be achieved in a turbine of constant volume, defined as one in which the exhaust cross-sectional area equals the inlet cross-sectional area. This can also be achieved in a turbine of diminishing volume, so long as the reduction of volume at the exhaust, relative to the inlet, is not so great as to preclude the first condition. In other words, the reduced volume at the exhaust cannot be such as to prevent the development of the negative temperature and pressure gradient. For example, it cannot result in any increase--or indeed even an equality--in pressure from inlet to exhaust.

In one particular arrangement in accordance with the invention, a constant volume turbine is coupled, via a throttling valve, to receive saturated steam from a suitable source, such as a boiler. The turbine and source are connected in a closed system with a pump connected to the exhaust to compress the residual vapor therein and apply it to the source. The turbine has a plurality of stages in which condensation of vapor occurs during the passage of the working fluid through the turbine. A plurality of sumps are individually associated with the individual stages and a pump is connected to these sumps to return the condensed water to the steam source. The pumps may be driven by the turbine output shaft or they may be driven by electric motors receiving power from a generator constituting the load, if preferred.

In another alternative arrangement in accordance with the invention, a turbine of decreasing volume from inlet to exhaust is coupled to a boiler into which sea water or some other water requiring distillation is pumped. The boiler is fuel fired and supplies saturated steam to the turbine. The turbine drives an associated compressor into which the turbine exhaust is directed, as well as an electrical generator as the load. The exhaust from the compressor, as well as the line from the turbine sump pump, contains distilled water. Thus this arrangement is used as a source of distilled water for needs such as may be encountered aboard ship, in desert areas and the like. In this arrangement, the electrical output from the generator may be applied to an auxiliary heater of the resistance type in the boiler.

Current steam tables show the properties of steam in terms of pounds. A pound of steam is simply the weight of the water which was used to make that steam, and is therefore the weight of the steam. As utilized herein, steam equivalent to the weight of the water will be referred to as "saturated steam". It is in phase equilibrium, meaning that it can exist in a stable condition in intimate association with water at the same pressure and temperature. It follows that lowering the temperature of the steam at constant volume by any means, such as conversion of thermal energy content to mechanical power, causes water to condense out, leaving the remaining steam at a lower pressure.

In general (at temperatures below 450°F) a lower temperature causes a pound of steam to contain less thermal energy. Of more importance to the present invention, however, is the fact that a pound of steam occupies a greater volume at a lower temperature. Thus under constant volume conditions, which are applicable to the present invention, the thermal energy content of a given constant volume may be reduced by an amount resulting from a lowered temperature as such, but to a much greater extent by reduction in the weight of the steam remaining in that constant volume. In accordance with the present invention, this reduction of thermal energy content by both of these means in a constant volume is converted to mechanical power.

These general principles prevailing with steam apply also to other vapors in phase equilibrium, such as dichlorodifluoromethane. They are utilized in accordance with the present invention by supplying a prime mover with such a phase equilibrium vapor under pressure. The prime mover is driven in response to the vapor pressure and also by reason of a difference in pressure, which must be greater at the supply side than at the exhaust. This difference in pressure could be achieved by expanding the vapor, as in more conventional systems, but in accordance with the present invention this is not utilized to any significant extent. In the present case, conversion of thermal energy to mechanical power in the prime mover removes heat, causing the vapor to become cooler. As it cools, the vapor pressure becomes lower and liquid condenses from it. This process thus develops the necessary lower pressure at exhaust than at the supply side, while the vapor occupies a constant volume. Another way of expressing it may be to consider that the vapor remaining as the liquid condenses out expands to occupy the available volume but with a resultant reduction in vapor pressure.

This process also accounts for thermal energy in the vapor (called heat of vaporization) that was required to change it from liquid to vapor. In this reverse process, this thermal energy is referred to as the heat of condensation and, in accordance with the present invention, is converted to mechanical power.

Condensate and remanant vapor can be cycled by suitable pumps and compressors for reuse in the system with the addition of heat. When employed in a distillation application, where the condensate is the desired product, the mechanical power produced by the prime mover can be converted to heat, as for instance through the medium of electricity, and returned to the source of vapor supply for utilization.

In the drawing:

Fig. 1 is a block diagram illustrating in general form one particular arrangement in accordance with the invention;

Fig. 2 is a more detailed schematic diagram of one preferred embodiment of the invention; and

Fig. 3 is a schematic diagram of an alternative embodiment of the invention.

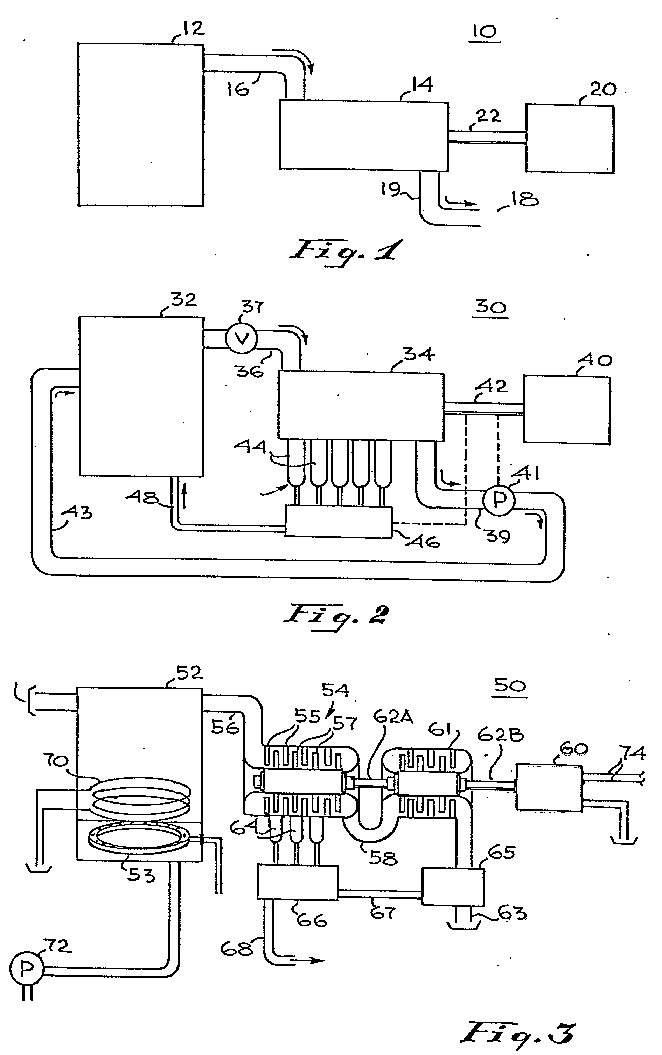

As indicated in the block diagram of Fig. 1, a system 10 in accordance with the invention is shown comprising a source 12 of saturated vapor, which may be water vapor, coupled to supply a prime mover 14 with the saturated vapor via a pipe 16. An exhaust pipe 19 is coupled to carry the exhaust 18 from the prime mover 14. A load 20 is shown coupled to be driven by the prime mover 14 via a shaft 22.

The prime mover 14 is of the limited expansion type, defined as hereinabove. It may have one or more stages for extracting mechanical energy from the working fluid. As a result of the mechanical energy derived from the working fluid by the prime mover 14, the exhaust 18 will contain condensed water and residual vapor at reduced pressure, whereas the fluid supplied to the inlet of prime mover 14 was in the form of saturated steam.

In the system 30 of Fig. 2, a source 32 of saturated steam is shown coupled to a prime mover, in the form of a constant volume turbine 34, driving a load 40 via an output shaft 42. The steam source 32 and turbine 34 are shown connected in a closed system with a pump 41 connected to the exhaust pipe 39 to compress the residual vapor in the exhaust and return it to the source 32 via a pipe 43. A throttling valve 37 is shown connected in the line 36 to control the amount of steam supplied to the turbine 34. In Fig. 2, the turbine 34 is shown as a five stage turbine, a corresponding sump 44 being associated with individual stages of the turbine 34. These collect water which condenses in association with the respective turbine stages and direct the water to a pump 46 which returns the water to the steam source via a pipe 48.

In the arrangement of Fig. 2, the source 32 of saturated steam (which may be a boiler) supplies the working fluid to the turbine 34 where a portion of the vapor condenses out as the fluid passes through the respective turbine stages to the exhaust. This water is collected and returned to the source. The exhaust of the turbine 34 contains residual vapor which is compressed by the pump 41 and returned to the source. Both of the pumps 41 and 46 may be driven by the turbine shaft 42, as indicated by the broken lines interconnecting them. Conventional equipment which may be included in such a system, such as feed water pumps and lines, burners and fuel lines have been omitted for simplicity.

In the system 50 of Fig. 3, a boiler 52 having a burner 53, such as is fired by gas, oil or coal, is coupled to a turbine 54 of reducing volume. Steam from the boiler 52 is supplied to the inlet of the turbine 54 via a line 56. The turbine 54 is shown including sets of stator blades 55 and rotor blades 57 interspersed to form a succession of stages with sumps 64 provided for collecting the condensed water from the individual stages and supplying it to a pump 66. The exhaust 58 of the turbine 54 is directed to an associated compressor 61, mounted to be driven by the turbine output shaft 62A. The compressor 61 serves to compress the residual vapor in the exhaust 58 for return to the boiler 52 via line 63, after passage through a separator 65 which diverts any condensate to the pump 66 via line 67. The condensate is distilled water which is provided via an outlet line 68 from the pump 66 for end use as such. An associated generator 60 is coupled to be driven by the turbine output shaft 62B and electrical power from the generator 60 is supplied to an auxiliary heater in the form of a resistance coil 70 in the boiler 52. Water is supplied to the boiler 52 from a source of sea water, or some other water which is to be distilled, by means of a pump 72.

Thus, in the arrangement of the invention shown in Fig. 3, the principal product from the operation of this system is distilled water which is condensed from the steam produced in the boiler from the sea water supplied thereto. Auxiliary power may be taken from the generator 60 via mains 74 for auxiliary use in lighting or the like. Also in this arrangement, some of the mechanical energy derived from the evaporation and condensing process is converted, by means of the generator 60, into electrical energy which is supplied to the boiler 52 to assist in the evaporation of the sea water.

It is not essential that a turbine of constant or diminishing volume from supply side to exhaust be employed in arrangements in accordance with the invention. Other machines capable of functioning as prime movers and which maintain a constant or diminishing volume from supply side to exhaust may be employed. For example, a machine operating on the principle of the Stirling engine may be substituted for the prime mover of Fig. 1. In such an embodiment, saturated vapor of the working fluid would be supplied in the cylinder space at the higher pressure end (customarily referred to as the hot space). This would initially drive the piston which in turn would cause the vapor to be transferred from the hot space to the cold space. In the process, some of the vapor condenses out, thus developing a lower pressure at the exhaust and providing the mechanism by which the engine is operated in accordance with the present invention.

Example of Operation:

As an example illustrating the principle of operation of arrangements in accordance with the present invention, the following may be considered. Steam temperatures between 212°F and 312°F offer a good range to be taken as an example. The corresponding gauge pressures are zero at 212°F and at about 65 psi at 312°F. At about 312°F, a pound of steam occupies about 5.5 cu. ft. At 212°F the pound of steam occupies about 26.8 cu. ft.

The enthalpy of the steam at 312°F is about 1183 btu per pound, and thus 1 cu. ft. of steam at this temperature would contain about 1183/5.5 or about 215 btu. At the lower temperature of 212°F, a pound of steam would contain a slightly lower enthalpy of about 1150 btu. Thus 1 cu. ft. of steam at this temperature contains about 1150/26.8 or about 42.9 btu, which is only about 20% of the thermal energy that the same cubic foot contains at the higher temperature. Thus about 80% of the thermal energy is accounted for by conversion to mechanical power.

The nominal 20% of the original thermal energy remaining in the steam at the lower temperature, which can be considered as the exhaust condition, is not necessarily lost to the system. It can be compressed and returned to the source with no theoretical loss.

## CLAIMS

1. An energy conversion system comprising a source of a heated and pressurized vapor in phase equilibrium; a prime mover for condensing the vapor and converting the heat of vaporization into mechanical energy therein, the prime mover having an inlet end coupled to the source for receiving the vapor and an exhaust end for exhausting residual vapor, characterized by the volume of the vapor at the inlet end being at least as great as the volume of the residual vapor at the exhaust end.

2. The system of claim 1 characterized by the prime mover being a turbine of substantially constant volume.

3. The system of claim 1 characterized by the prime mover being a turbine of diminishing volume between the inlet end and the exhaust end.

4. The system of either claim 2 or claim 3 characterized by the vapor being that of a liquid of low boiling point.

5. The system of claim 4 characterized by the liquid being dichlorodifluoromethane.

6. The system of claim 2 or claim 3 further characterized by means coupled to the turbine exhaust for compressing the residual vapor in the exhaust and returning the exhaust to the source of vapor.

7. The system of claim 6 further characterized by a sump for collecting liquid condensing out of the vapor during the energy conversion process, and means for pumping the liquid to the source of saturated vapor.

8. The system of claim 1 characterized by the source of saturated vapor being a steam boiler.

9. The system of claim 8 characterized by the boiler being connected to receive water from a sea water source, and further including means coupled to the prime mover to provide distilled water for end use.

10. The system of claim 9 further characterized by a generator driven by the prime mover and coupled to auxiliary heating means in the boiler for converting a portion of the mechanical energy developed by the prime mover into heat for further heating the water in the boiler.

11. A process for converting thermal energy to mechanical power in the system of any of claims 1-10 comprising the steps of: supplying to a prime mover a heated and pressurized vapor in such phase equilibrium that removal of heat will result in condensation of vapor to a liquid phase, condensing at least a portion of the vapor within the prime mover to a liquid phase during conversion of thermal energy in the vapor to mechanical power by the prime mover, and characterized by maintaining the net volume of the vapor without expansion between the inlet and exhaust of the prime mover and developing a negative temperature and pressure gradient between inlet and exhaust of the prime mover to provide mechanical power from the prime mover.

12. The process of claim 11 further characterized by compressing the residual exhaust vapor from the prime mover, collecting the liquid from the condensing step, and reusing both the compressed residual exhaust vapor and the condensate in supplying the vapor to the prime mover.

13. The process of claim 11 or claim 12 further characterized by diminishing the volume of the vapor through the prime mover at a rate which is less than that which would preclude developing negative temperature and pressure gradient.

14. The process of any of claims 11-13 further characterized by extracting condensate from the prime mover and providing the condensate as distilled liquid at an outlet end of the process

Fig. 1

Fig. 2

Fig. 3